**Europäisches Patentamt**

**European Patent Office**

**Office européen des brevets**

(19)

(11) Veröffentlichungsnummer: **0 008 094**
**B1**

(12) # EUROPÄISCHE PATENTSCHRIFT

(45) Veröffentlichungstag der Patentschrift:
**12.05.82**

(21) Anmeldenummer: **79102803.8**

(22) Anmeldetag: **04.08.79**

(51) Int. Cl.³: **C 04 B 13/24,** C 11 D 1/66

(54) Zusatzmittel für Beton oder Zementmörtel und dessen Verwendung als Pumphilfe.

(30) Priorität: **12.08.78 DE 2835423**

(43) Veröffentlichungstag der Anmeldung:
**20.02.80 Patentblatt 80/4**

(45) Bekanntmachung des Hinweises auf die Patenterteilung:
**12.05.82 Patentblatt 82/19**

(84) Benannte Vertragsstaaten:
**AT BE CH DE FR GB IT NL SE**

(56) Entgegenhaltungen:
**keine**

(73) Patentinhaber: **HOECHST AKTIENGESELLSCHAFT,
Postfach 80 03 20, D-6230 Frankfurt/Main 80 (DE)**

(72) Erfinder: **Debus, Gerhard, Frankenthalstrasse 20,
D-6220 Rüdesheim-Assmannshausen (DE)**
Erfinder: **Girg, Friedrich, Wallbacher Strasse 36,
D-6271 Idstein-Wörsdorf (DE)**
Erfinder: **Knittel, Volker Dr., Heinrich-Zille-Strasse 36,
D-6200 Wiesbaden (DE)**

Zusatzmittel für Beton oder Zementmörtel und dessen Verwendung als Pumphilfe

Die Erfindung betrifft ein Zusatzmittel für Beton oder Zementmörtel aus einem Celluloseether und einem Tensid und die Verwendung dieses Zusatzes als Pumphilfe für Beton oder Zementmörtel.

Der Zusatz von Celluloseethern oder Tensiden zu Beton oder Zementmörtel ist bereits seit langem bekannt. Beispielsweise werden wasserlösliche Celluloseether (z. B. Methylhydroxyethylcellulosen) zur Steuerung der Wasserretention, zur Verbesserung der Haftung und zur Erhöhung der Konsistenz von Putz-, Klebe- und Spachtelmassen eingesetzt. Einige dieser Anwendungsgebiete sind: Einlagen-Haftputz für Handverarbeitung, auf extrem glatten oder saugenden Untergründen. Einlagen-Maschinenputz für normale Putzuntergründe, Dünn- oder Spachtelputz, Fliesenkleber, Dünnbettklebemörtel für Gasbetonplansteine und Kalksandsteine, Füll- und Fugenspachtel, Mauermörtel, Thermoputz, Reibeputz, Einlagen-Kratz- oder Luftporenedelputz. Zu den Anwendungsgebieten der Tenside zählen beispielsweise: die nichtionischen Nonylphenolpolyglykolether mit etwa 4 bis 15 Mol angelagertem Ethylenoxid pro 1 Mol Nonylphenol gelten bei niedrigem Ethylenoxid-Anteil als nicht- oder schwachluftporeneinführende Plastifizierungsmittel und bei höherem Ethylenoxid-Anteil als Luftporenbildner, damit soll u. a. auch die Pumpfähigkeit von Beton oder Zementmörtel verbessert werden können; die anionaktiven $C_{12}/C_{14}$-Alkohol-polyglykolethersulfate gelten als Luftporenbildner, die auch eine plastifizierende Wirkung aufweisen und die Verarbeitbarkeit und das Wasserrückhaltevermögen von Mörteln verbessern; die anionaktiven $\alpha$-Olefinsulfonate sind ebenfalls gute Luftporenbildner, die auch als Netz- und Plastifizierungsmittel wirken.

Es sind auch bereits kombinierte Zusätze aus Celluloseethern und bestimmten Tensiden bekanntgeworden, wie es insbesondere in den folgenden Druckschriften beschrieben ist:

In der DE-A-1 571 449 wird ein hydraulischer Zementmörtel beschrieben, der neben Portlandzement, einem Füllstoff (z. B. Sand), Wasser und einer Polymeremulsion (z. B. einem Vinyliden-Vinylchlorid-Acryl-Terpolymer) noch Methylcellulose und Antischaummittel zur Verminderung der Blasenbildung enthält. Die Zugabe des Celluloseethers soll in diesen eine Polymeremulsion enthaltenden Mörteln die Bindefestigkeit der Mörtel an den Bauteilen erhöhen, es werden bevorzugt etwa 0,03 bis 0,1 Gew.-% Celluloseether im Mörtel eingesetzt. Als Antischaummittel enthalten diese Mörtel in einem Anteil von etwa 0,1 Gew.-% solche auf Siliconbasis. Diese Mörtel sollen zur Verbindung von Asphalt enthaltenden Baumaterialien geeignet sein.

Das hydraulische Bindemittel zur Herstellung von Putz- und Mauermörtel gemäß der DE-B-1 812 401 besteht aus mindestens 99,6 Gew.-% Zement, 0,005 bis 0,35 Gew.-% Celluloseethern und 0,005 bis 0,2 Gew.-% oberflächenaktiven Substanzen. Das Gewichtsverhältnis von Celluloseethern zu den oberflächenaktiven Substanzen wird so gewählt, daß es 3,5 : 1 bis 1 : 1 beträgt. Durch diesen Zusatz soll bei der Herstellung dieses Bindemittels auf die Beimischung von Gesteinsmehl verzichtet werden können. Als oberflächenaktive Substanzen werden Alkyl-, Aryl- oder Alkylarylsulfonate, Sulfitablauge und Harzseifen aufgeführt. Der Luftporengehalt beträgt in mit diesem Bindemittel hergestellten Mörteln etwa 16,5 bis 18,5%.

Aus der DE-A-2 046 046 ist ein Putzmörtel auf Kalk-Sand-Basis unter Verwendung eines hydraulischen Bindemittels bekannt, der 0,03 bis 1 Gew.-% die Haftung verbessernde Mittel (z. B. Methylcellulose), 0,03 bis 1 Gew.-% Thixotropiermittel, 0,02 bis 0,3 Gew.-% Dispersionspulver und 0,02 bis 0,3 Gew.-% luftporenbildende Mittel enthält. Der Einsatz der letztgenannten Mittel führt zu einer Einführung von ca. 10 bis 40% Luft.

In der DE-A-2 060 106 wird eine Verbundmasse für Fertigbauteile aus Gassilikatbeton beschrieben, die neben Bindemitteln, Zuschlagstoffen und Anmachwasser einen Celluloseether als Wasserrückhaltemittel und ein Benetzungsmittel enthält. Als Benetzungsmittel werden ionogene, nichtionogene oder amphotere Tenside wie Alkylsulfate, Alkyl-, Alkylaryl- oder Arylsulfonate, Fettsäurekondensationsprodukte, Ethylenoxidaddukte mit Fettsäuren und Alkoholen, Fettalkoholsulfate, Ölsulfate, Alkylpolyglykolether, Alkylphenolether oder Polyphosphate genannt. Dabei beträgt der Anteil an Celluloseether (Carboxymethylcellulose) etwa 3,2 Gew.-% und der Anteil an Benetzungsmittel (Alkylarylsulfonat) etwa 0,8 Gew.-%, bezogen auf die trockene Verbundmasse.

Der Feinstmörtel für Innen- und Außenputz gemäß der DE-A-2 341 684 kann neben gemahlenem Kalkstein, geblähtem Perlit und einem hydraulischen Bindemittel einen Celluloseether, ein Polymerisat, ein Netzmittel, ein hydrophobes Mittel oder einen Abbindezeitregler enthalten. Als Netzmittel wird das Triethanolaminsalz eines Laurylsulfats oder Natriumlaurylethersulfats genannt.

Aus der DE-A-2 450 681 ist ein Zusatzmittel für selbstglättenden Mörtel bekannt, das aus 30 bis 80 Gew.-% eines Füll- und Trägermaterials mit einer spezifischen Oberfläche von mehr als 10 $m^2/g$, 10 bis 40 Gew.-% eines Emulgatorsystems und 5 bis 60 Gew.-% eines Wasser zurückhaltenden Mittels besteht. Der Anteil dieses Zusatzes soll etwa 2 bis 8 Gew.-Teile in 169 bis 284 Gew.-Teilen des Mörtels betragen. Als Füll- und Trägermaterialien werden Silicate, Oxide, Carbonate und Sulfate genannt. Dieser Füllstoff dient als Träger für das Emulgatorsystem aus nichtionogenen Tensiden wie Alkylphenolen, Fettsäuren, Fettalkoholen oder Oxethylenderivaten mit 6 bis 30 Mol Ethylenoxid pro Mol Octylphenol oder Nonylphenol und anionogenen Tensiden wie sulfatierten Derivaten von Amiden von Aminalkoholen, von Aminosulfonsäuren oder Aminosäuren abgeleiteten Amiden, Derivaten von Monoestern oder Diestern und Derivaten von Alkylbenzolsulfonaten. Der mit dem Emulgatorsystem kombinierte Füllstoff wird mit dem Wasser zurückhaltenden Mittel, z. B. einem Celluloseether, vermischt.

Das Zusatzmittel für hydraulischen Mörtel und Beton gemäß der DE-A-2 527 546 beschleunigt den Erstarrungsbeginn. Es enthält neben einem Carbonationen abgebenden Stoff (z. B. $Na_2CO_3$) und einem Aluminat oder einem Aluminiumoxid einen die Thixotropie des Mörtels oder Betons mindestens fördernden Stoff, insbesondere ein lineares wasserlösliches Polyethylenoxid. Ein mit diesem Zusatzmittel versehener Beton oder Mörtel soll über lange Strecken bis an den Ort der Anwendung herangeführt werden können.

In der DE-A-2 710 975 wird eine pumpfähige zementhaltige Mischung aus Wasserzement, Wasser, einem porösen leichtgewichtigen Zuschlagstoff, einem Dispergiermittel, einem Geliermittel und gegebenenfalls einem Plastifiziermittel beschrieben. Die Mengenanteile Plastifiziermittel, Dispergiermittel und Geliermittel sollen im Gewichtsverhältnis 3 : 1 : 1 vorhanden sein, wobei der Anteil an Dispergier- und Geliermittel in der fertigen Mischung 0,001 bis 0,04 Gew.-% beträgt. Als Geliermittel werden wasserlösliche Celluloseether, als Dispergiermittel sulfonierte Produkte auf der Basis von Melaminformaldehyd, Polystyrol oder Naphthalinformaldehyd und als Plastifizierungsmittel Lignosulfat und Hydroxycarbonsäurederivate aufgeführt.

Nach der DE-A-2 751 764 werden schwachschäumende Tenside bei der Herstellung von hydraulischen Zementmischungen mitverwendet, die als Komponenten u. a. auch sogenannte »Wasserbedarf-Verringerungsmittel« enthalten sollen. Der einzige Celluloseether, der auf Seite 21, Absatz 2, dieser Druckschrift konkret genannt wird, ist eine Carboxymethylcellulose, d. h. ein ionischer Celluloseether.

In der DE-A-1 671 279 wird ein Zusatz für Formengipse beschrieben, der als wesentliche Komponenten Polyvinylacetat, 0,5 Gew.-% an ionischen Emulgatoren und 6 Gew.-% an nichtionischen Emulgatoren aufweist (die Mengen sind jeweils auf das Gewicht des Polyvinylacetats bezogen); außerdem kann der Zusatz auch noch bis zu 2 Gew.-% an Schutzkolloiden enthalten. Das Gewichtsverhältnis des Schutzkolloids (z. B. Hydroxyethylcellulose) zum nichtionischen Emulgator (z. B. Nonylphenolpolyethylenglykolether mit 15 Oxethyleneinheiten im Molekül) beträgt im Beispiel 1 etwa 1,4 zu 1,0, d. h. etwa 71,5 Gew.-% Tensid, bezogen auf den Anteil an Celluloseether.

Die neben den nichtionogenen Celluloseethern gemäß der DE-A-2 304 478 eingesetzten Plastifizierungsmittel sind (siehe Beispiele 1 bis 4) typische Luftporenbildner, d. h. schäumende Tenside.

Der DE-A-2 403 444 kann zwar entnommen werden, daß Polymerisat-Dispersionen Schutzkolloide wie Celluloseether zugesetzt werden können und das Schäumen dieser auch Emulgatoren enthaltender Dispersionen durch Zusatz bestimmter Polyalkylenoxid-Derivate heruntergesetzt werden kann; es ist jedoch weder eine Angabe zur Art des Celluloseethers noch zu den eingesetzten Mengen oder Mengenverhältnissen einzelner Komponenten untereinander zu entnehmen.

Betone oder Zementmörtel werden in jüngerer Zeit, z. B. beim Bau von Hochhäusern, in steigendem Maße mit Hilfe von Pumpen durch längere Rohrstrecken gefördert, damit sie nicht erst am Verarbeitungsort aus ihren Bestandteilen, wie mineralischen Bindemitteln, Zuschlagstoffen und Anmachwasser, erzeugt werden müssen. So ist es möglich, die Bestandteile oder auch sogenannte Fertigbetone oder Fertigmörtel (d. h. die üblichen Bestandteile einschl. Wasser enthaltende Baustoffe) an für Transportfahrzeuge günstige Plätze zu befördern, von wo aus sie dann über mehr oder weniger lange Rohrstrecken, die auch Höhenunterschiede überwinden können, an den eigentlichen Verarbeitungsort transportiert werden. Um einen solchen plastischen, pumpfähigen Beton oder Zementmörtel zu erzeugen, kann beispielsweise ein relativ großer Überschuß an Anmachwasser gewählt werden, was jedoch häufig zu einer Absonderung eines Teils des Anmachwassers auf der Beton- oder Mörteloberfläche (»Ausbluten«) führt. Daneben tritt auch oftmals eine Sedimentation von Grob-Zuschlagstoffen auf, während Leicht-Zuschlagstoffe durch »Aufschwimmen« auf der Oberfläche eine Entmischung der Beton- oder Zementmörtel-Bestandteile bewirken können. Durch diese Erscheinungen kann das Pumpen der Baustoffe in erheblichem Maße behindert werden, da es an Krümmungen, in sehr langen Rohrleitungen und insbesondere bei Stillstandzeiten zu Entmischungen und Verstopfungen kommen kann.

Der — siehe auch weiter oben — bekannte Zusatz von verflüssigend wirkenden Zusatzmitteln, z. B. anionischen Dispergiermitteln wie Alkylarylsulfonaten, Ethylenoxid-Additions-Produkten, Alkylphenol-polyglykolethern, Ligninsulfonaten, oder insbesondere aber höhermolekularen, anionischen Kondensationsprodukten aus gegebenenfalls substituierten aromatischen Kohlenwasserstoffen oder aromatischen Heterocyclen mit Aldehyden, soll dazu beitragen, den Anmachwasser-Bedarf deutlich zu verringern und daneben die Geschmeidigkeit des Betons oder Zementmörtels zu verbessern, um dadurch eine bessere Pumpfähigkeit zu erzielen. Von den bekannten Verflüssigern sind jedoch auch verschiedene oftmals störende Nachteile bekanntgeworden. Beispielsweise zeigt sich bei den eine relativ geringe Verflüssigungswirkung aufweisenden anionischen Dispergiermitteln eine gewisse Minderung der Abbindegeschwindigkeit und eine Erhöhung des Luftporengehalts. Hingegen treten bei den eine relativ bessere Verflüssigerwirkung aufweisenden höhermolekularen, anionischen Kondensationsprodukten Sedimentationserscheinungen auf, die ebenfalls zum »Ausbluten« führen

0 008 094

können.

Der Zusatz von in Wasser quellfähigen oder löslichen Hochpolymeren — siehe auch weiter oben — (z. B. Celluloseether, Polyvinylalkohole, Polyacrylamide, Polyethylenoxide oder Stärkeether) kann zwar das »Ausbluten« und/oder die Entmischung des Betons oder Zementmörtels verhindern, erfordert aber oftmals dann überhöhte Anmachwasser-Mengen, da er normalerweise eine zähklebrige, die Pumpfähigkeit beeinträchtigende Konsistenz im Beton oder Zementmörtel zur Folge hat. Außerdem führt ein solcher Zusatz auch zur Stabilisierung von bereits vorhandenen oder beim Mischen oder Pumpen eingeführten Luftblasen oder kann eine zu starke, die Abbindezeit verzögernde Wirkung ausüben.

Der Erfindung liegt deshalb die Aufgabe zugrunde, einen Zusatz für Beton oder Zementmörtel vorzuschlagen, der die aus dem Stand der Technik bekannten Nachteile nicht aufweist und insbesondere als Pumphilfe für Beton oder Zementmörtel geeignet ist.

Die Erfindung geht aus von einem Zusatzmittel für Beton oder Zementmörtel aus einem Celluloseether und einem Tensid. Das erfindungsgemäße Zusatzmittel ist dadurch gekennzeichnet, daß das Mittel als Celluloseether einen wasserlöslichen nichtionogenen Celluloseether und als Tensid ein nichtionogenes, schwachschäumendes Tensid enthält, wobei der Anteil des Tensids 0,5 bis 20 Gew.-%, insbesondere 1 bis 10 Gew.-%, bezogen auf das Gewicht des Celluloseethers, beträgt.

Zu den Betonen und Zementmörteln zählen verschiedenste wasserhaltige, abbindende Baustoffe auf der Basis von Gemischen (vor dem Abbinden) aus einem Bindemittel, Füll- und Zuschlagstoffen, Wasser und gegebenenfalls einem oder mehreren Hilfsmitteln; es wird erfindungsgemäß Zement als Bindemittel eingesetzt. Als Füll- und Zuschlagstoff werden in der Regel körnige anorganische Substanzen verwendet, beispielsweise fein- bis grobkörniger Sand, Silicate auf der Basis von Gesteinsmehl oder Hochofenschlacken, Kalksteinmehl, Kaolin, Kieselgur, Perlit, Bimsstein oder geschäumte Kunststoffkügelchen (z. B. aus Polystyrol). Zu den Hilfsmitteln zählen u. a. Abbindeverzögerer oder -beschleuniger, Thixotropiermittel, Frostschutzmittel oder die Wasserundurchlässigkeit erhöhende Mittel; diese Hilfsmittel sind für gewisse Anwendungsgebiete (z. B. Leichtbeton oder dünne Schichten von Mörtel) der Betone oder Zementmörtel von Vorteil.

Die erfindungsgemäß einsetzbaren Celluloseether sind wasserlösliche nichtionogene Celluloseether wie Methylcellulose (MC), Alkyl-hydroxyalkylcellulose und Hydroxyalkylcellulose, bevorzugt Methyl-hydroxyethylcellulose (MHEC), Methyl-hydroxypropylcellulose (MHPC), Ethylhydroxyethylcellulose (EHEC) und Hydroxyethylcellulose (HEC). Es sind jedoch auch andere Mischether verwendbar, sofern sie wasserlöslich sind und einen mindestens überwiegend nichtionogenen Charakter aufweisen. Die Celluloseether können als Pulver, fasrige Ware oder als Granulat eingesetzt werden, wobei sie insbesondere in anquellverzögerter, d. h. in Wasser temporär nicht oder nur wenig quellbarer Form vorliegen, aber sie können auch eingesetzt werden, wenn sie bezüglich des Anquell-Verhaltens, beispielsweise durch oberflächliche chemische Vernetzung oder eine andersartige Modifizierung, nicht vorbehandelt worden sind.

Von den Celluloseethern werden zweckmäßig 0,005 bis 0,5 Gew.-%, insbesondere 0,01 bis 0,05 Gew.-%, bezogen auf das Gewicht der trockenen Anteile des Zementmörtels oder Betons verwendet.

Die erfindungsgemäß verwendeten nichtionogenen, schwachschäumenden Tenside sind insbesondere solche, die einen größeren Anteil hydrophober als hydrophiler Gruppen aufweisen. Dazu gehören bevorzugt reine Blockpolymerisate aus Propylenoxid und Ethylenoxid mit hohem Propylenoxid- und niedrigem Ethylenoxid-Anteil, modifizierte Blockpolymerisate auf der Grundlage von Ethylen- und Propylenoxid oder Umsetzungsprodukte aus Alkylphenolen (z. B. Nonylphenol) und einer geringen Anzahl von Ethylenoxidmolekülen (Alkylarylpolyethylenglykolether). Unter ihnen sind wiederum die Tenside mit einem Propylenoxid-Anteil besonders bevorzugt. Beispiele für die erfindungsgemäß verwendbaren nichtionogene, schwachschäumenden Tenside sind: Blockpolymerisate aus 90% Propylenoxid und 10% Ethylenoxid, Blockpolymerisat aus Ethylendiamin als Startmolekül und Ethylenoxid und Propylenoxid, Blockpolymerisat aus einem $C_{12}/C_{14}$-Alkohol und Ethylenoxid und Propylenoxid und ein Nonylphenol-polyglykolether aus Nonylphenol und 4 Mol Ethylenoxid.

Von den nichtionogenen, schwachschäumenden Tensiden werden 0,5 bis 20 Gew.-%, insbesondere 1 bis 10 Gew.-%, bezogen auf das Gewicht des Celluloseethers verwendet.

Sofern die nichtionogenen, schwachschäumenden Tenside nur in flüssiger Form vorliegen, so werden sie zweckmäßigerweise auf inerte Trägermaterialien aufgebracht, damit die Rieselfähigkeit der mit ihnen zu vermischenden Celluloseether möglichst gewährleistet bleibt. Als geeignete Trägermaterialien können Silicate, Oxide und bestimmte Carbonate oder Sulfate verwendet werden; beispielsweise genügen als Trägermaterial etwa 1 bis 3 Gew.-Teile eines Aluminiumsilikats oder einer Kieselsäure auf 1 Gew.-Teil Tensid.

Das erfindungsgemäße Zusatzmittel kann einzelnen der Beton- oder Zementmörtelkomponenten oder dem bereits angemachten Beton oder Zementmörtel zugesetzt werden, wobei es besonders zweckmäßig als fertiges Gemisch aus Celluloseether, Tensid, und gegebenenfalls einem Trägerstoff für das Tensid, aber auch in den einzelnen Bestandteilen aus einerseits dem Celluloseether und andererseits dem Tensid angewandt werden kann.

Gegenüber den aus dem Stand der Technik (siehe auch die nachfolgend beschriebenen Vergleichsbeispiele) bekannten Mitteln weist das erfindungsgemäße Zusatzmittel verschiedene

4

Vorteile auf, die es insbesondere für die Verwendung als Pumphilfe geeignet machen: Beispielsweise tritt bei Zugabe dieses Zusatzmittels zu Zementmörtel oder Beton, die oftmals beim Transport über längere Strecken oder beim längeren Lagern dieser angemachten Baustoffe zu beobachtende Sedimentationsneigung oder das »Ausbluten« nicht mehr oder nur noch in geringerem Maße auf. Darüber hinaus werden die von den Celluloseethern bekannten Eigenschaften wie Steuerung der Wasserretention, Verbesserung der Haftung und guter Zusammenhalt der Beton- oder Mörtelkomponenten untereinander erhalten, ohne daß eine zu zähklebrige Konsistenz oder eine für die Festigkeit des Betons oder Zementmörtel oftmals abträgliche größere Zunahme des Luftporengehalts auftritt.

Die in den Beispielen aufgeführten %-Werte sind — wenn nichts anderes angegeben ist — immer als Gew.-% zu verstehen. Die in den Beispielen aufgeführten Meßwerte wurden mit den folgenden Baustoffen und nach den folgenden Meßmethoden ermittelt.

Baustoff 1

| 50 Gew.-Teile | Portlandzement 350 F |
| 50 Gew.-Teile | Normensand I |
| 50 Gew.-Teile | Quarzsand 0,2 bis 0.7 mm |
| 50 Gew.-Teile | Quarzsand 1,0 bis 2,2 mm |
| 30 Gew.-Teile | Wasser |

Baustoff 2

| 50 Gew.-Teile | Portlandzement 350 F |
| 100 Gew.-Teile | Quarzsand 1,0 bis 2,2 mm |
| 50 Gew.-Teile | Quarzsand H 33 |
| 25 Gew.-Teile | Quarzsand 0,2 bis 0,8 mm |
| 25 Gew.-Teile | Normensand |
| 31 Gew.-Teile | Wasser |

Baustoff 3

| 45 Gew.-Teile | Portlandzement 350 F |
| 135 Gew.-Teile | Normensand |
| 22,5 Gew.-Teile | Wasser |

## Pumpfähigkeit des Baustoffs

Als Maß für die Pumpfähigkeit des Baustoffs werden zwei Meßmethoden herangezogen: Das Ausbreitmaß des Baustoffes wird — mit und ohne Zusatz — in cm auf dem Rütteltisch nach DIN 1164 (Ausgabe 1958) ermittelt und sollte sich bei Baustoffen mit Zusatz nur unwesentlich gegenüber Baustoffen ohne Zusatz reduzieren, um dessen Fließverhalten nicht allzu negativ zu beeinflussen.

Die Powerswerte des Baustoffes dienen zur Bestimmung des Verarbeitungsgrades des Baustoffes und werden — mit und ohne Zusatz — im kleinen Rüttelgerät nach Powers der Bauform 7610 der Bauart Tonindustrie gemessen. Dabei wird der Baustoff in einen konischen Trichter gefüllt, dieser entfernt und der Baustoffkegel mit einer Platte und Meßstange (von oben nach unten frei beweglich) belegt. Der Baustoff kann einem Zwang, wie er in diesem Fall durch Rüttelstöße erzeugt wird, zur Seite entweichen. Die Anzahl der Rüttelstöße, die zum Erreichen eines bestimmten Maßes auf der Meßstange (von 15 unten bis 2,5 oben) nötig sind, gelten als Maß für den Verarbeitungsgrad des Baustoffes. Die möglichst kontinuierliche Zunahme der Rüttelstöße und eine möglichst geringe Anzahl von benötigten Rüttelstößen bis zum Powers-Wert 4 sind ein Anhaltspunkt für eine gute Pumpfähigkeit des Baustoffes.

## Luftporengehalt

Der Luftporengehalt wird in Vol.-% angegeben und mit dem Luftporengehalt-Prüfer (Drucktopf 1 l) der Bauart Tonindustrie bestimmt.

## Biegezug- und Druckfestigkeit

Diese Werte werden nach DIN 1164 (Ausgabe 1970, Blatt 7) nach 28 Tagen Lagerzeit bestimmt und in $N/mm^2$ angegeben.

### Sedimentationsneigung und Homogenität

Die Sedimentationsneigung wurde visuell nach vergleichenden Kriterien in 3 Kategorien: mäßig, mittel und stark bestimmt. Die Homogenität wurde ebenfalls nach vergleichenden Kriterien in 3 Kategorien: gut, mittel und wenig bestimmt.

### Vergleichsbeispiele V 1 bis V 5

Es werden ein Baustoff des Typs 1 mit verschiedenen nicht erfindungsgemäßen Gemischen aus Celluloseethern (Komponente 1) und Tensiden oder anderen bekannten Zusatzstoffen (Komponente 2) und der entsprechende Baustoff ohne Zusatz (V1) angemacht und ihr Luftporengehalt bestimmt. Die Ergebnisse sind in Tabelle I zusammengefaßt. Als Celluloseether wurde in allen Beispielen eine MHEC einer mittleren Viskosität (in 2%iger wäßriger Lösung bei 20°C nach Höppler) von 30 Pa · s bei einem Methoxylgehalt von etwa 28 Gew.-% und einem Hydroxyethylgehalt von etwa 4 bis 6 Gew.-% eingesetzt; die Menge der Komponente 2 ist auf das Gewicht des Celluloseethers bezogen.

### Beispiele 1 bis 15

Es wird ein Baustoff des Typs 1 mit verschiedenen erfindungsgemäßen Zusätzen aus Komponente 1 (MHEC gleicher Typ wie vorher) und Komponente 2 (einem schwachschäumenden, nichtionischen Tensid) angemacht und der Luftporengehalt bestimmt. Die Ergebnisse sind ebenfalls in Tabelle I zusammengefaßt. Es zeigt sich bei Einsatz von den erfindungsgemäßen Zusätzen eine eindeutige Verschiebung zu einem niedrigeren Luftporengehalt, der insbesondere dann erkennbar ist, wenn ein Propylenoxid-Anteil im Tensidmolekül vorhanden ist.

### Vergleichsbeispiele V 6 bis V 11

Es werden ein Baustoff des Typs 2 (Prüfung der Powers-Werte, des Ausbreitmaßes, des Luftporengehalts, der Sedimentationsneigung und der Homogenität) oder des Typs 3 (Prüfung der Festigkeit) mit aus dem Stand der Technik bekannten Zusätzen (Komponente 1) aus Polyethylenoxid (V 7 bis V 10), Celluloseether (V 11) und der entsprechende Baustoff ohne Zusatz (V 6) angemacht und die Prüfungen durchgeführt. Die Ergebnisse sind in Tabelle II zusammengefaßt. Als Celluloseether wurde eine MHEC einer mittleren Viskosität von 30 Pa · s (gleicher Typ wie vorher) eingesetzt, die Menge der Komponente 1 ist auf das Gewicht des Trockenanteils des Baustoffs bezogen. Es zeigt sich u. a. daß eine Verbesserung im Verarbeitungsgrad eines mit Polyethylenoxid versetzten Baustoffs (zur Erreichung einer guten Pumpfähigkeit) erst mit steigender Zusatzmenge eintritt.

### Beispiele 16 bis 22

Es wird ein Baustoff des Typs 2 oder des Typs 3 (Prüfungsarten siehe oben) mit den aus Tabelle II ersichtlichen erfindungsgemäßen Zusätzen aus Komponente 1 (Beispiele 16 bis 21 MHEC wie Beispiele 1 bis 15 und Beispiel 22 ebenfalls eine MHEC gleichen Substitutionsgrades aber mit einer mittleren Viskosität von 10 Pa · s) und Komponente 2 (einem schwachschäumenden, nichtionischen Tensid) angemacht und die Prüfungen durchgeführt. Die Ergebnisse sind in Tabelle II zusammengefaßt. Die Menge der Komponente 1 ist auf das Gewicht des Trockenanteils des Baustoffs bezogen, die Menge der Komponente 2 auf das Gewicht des Celluloseethers. Es zeigt sich u. a. gegenüber einem reinen Celluloseether-Zusatz eine eindeutige Senkung des LP-Gehalts und gegenüber einem Polyethylenoxid-Zusatz eine Verbesserung im Verarbeitungsgrad mit verringerter Zusatzmenge.

Tabelle I

| Beispiel | Zusatzmenge an Cellu-loseether bezogen auf den Trockenanteil des Baustoffs | | Komponente 2 | | LP-Gehalt |
| | in Gew.-Teilen | in Gew.-% | Art | Menge in Gew.-%*) | (Vol.-%) |
|---|---|---|---|---|---|
| V 1 | — | — | — | — | 5,4 |
| V 2 | 0,2 | 0,1 | Na-glukonat | 10 | 13,2 |
| V 3 | 0,2 | 0,1 | $C_{12}/C_{15}$-Alkohol mit 3 Molen Ethylenoxid | 10 | 10,2 |
| V 4 | 0,2 | 0,1 | Mischung aus Mono-, Di- und Tri-oleylorthophosphorsäureester | 10 | 12,8 |
| V 5 | 0,2 | 0,1 | Xylenolpolyglykolether | 5 | 12,2 |
| 1 | 0,2 | 0,1 | Nonylphenolpolyglykolether mit 4 Mol Ethylenoxid | 5 | 7,8 |
| 2 | 0,2 | 0,1 | Blockpolymerisat aus Polypropylen-oxid eines Molekulargewichts von etwa 1700 mit 10% Ethylenoxid | 10 | 4,9 |
| 3 | 0,2 | 0,1 | Blockpolymerisat aus Polypropylen-oxid eines Molekulargewichts von etwa 1700 mit 10% Ethylenoxid | 5 | 5,4 |
| 4 | 0,2 | 0,1 | Blockpolymerisat aus Polypropylen-oxid eines Molekulargewichts von etwa 1700 mit 10% Ethylenoxid (+ 5% Kieselsäure als Träger) | 5 | 4,7 |
| 5 | 0,2 | 0,1 | Blockpolymerisat aus Polypropylen-oxid eines Molekulargewichts von etwa 1700 mit 10% Ethylenoxid (+ 7% Al-silikat als Träger) | 3 | 5,4 |
| 6 | 0,2 | 0,1 | Blockpolymerisat aus Polypropylen-oxid eines MG von etwa 2300 mit 10% Ethylenoxid | 5 | 4,8 |
| 7 | 0,2 | 0,1 | Blockpolymerisat aus Polypropylen-oxid eines MG von etwa 2300 mit 10% Ethylenoxid (+ 5% Kieselsäure als Träger) | 5 | 5,2 |
| 8 | 0,2 | 0,1 | Blockpolymerisat aus Polypropylen-oxid eines MG von etwa 2300 mit 10% Ethylenoxid (+ 7% Al-silikat als Träger) | 3 | 5,9 |
| 9 | 0,2 | 0,1 | $C_{12}/C_{14}$-Alkohol mit 4 Molen Ethylenoxid + 4 Molen Propylenoxid | 10 | 6,2 |
| 10 | 0,2 | 0,1 | $C_{12}/C_{14}$-Alkohol mit 4 Molen Ethylenoxid + 4 Molen Propylenoxid (+ 7% Al-silikat als Träger) | 3 | 6,7 |

Fortsetzung

| Beispiel | Zusatzmenge an Cellu-loseether bezogen auf den Trockenanteil des Baustoffs | | Komponente 2 | | LP-Gehalt |
|---|---|---|---|---|---|
| | in Gew.-Teilen | in Gew.-% | Art | Menge in Gew.-%*) | (Vol.-%) |
| 11 | 0,2 | 0,1 | $C_{12}/C_{14}$-Alkohol mit 12 Molen Ethylenoxid + 15 Molen Propylenoxid | 10 | 4,7 |
| 12 | 0,2 | 0,1 | $C_{12}/C_{14}$-Alkohol mit 12 Molen Ethylenoxid + 15 Molen Propylenoxid (+ 7% Al-silikat als Träger) | 3 | 5,9 |
| 13 | 0,2 | 0,1 | Blockpolymerisat aus Ethylendiamin, Ethylenoxid und Propylenoxid | 5 | 5,5 |
| 14 | 0,2 | 0,1 | Blockpolymerisat aus Ethylendiamin, Ethylenoxid und Propylenoxid (+ 5% Kieselsäure als Träger) | 5 | 5,3 |
| 15 | 0,2 | 0,1 | Blockpolymerisat aus Ethylendiamin, Ethylenoxid und Propylenoxid (+ 7% Al-silikat als Träger) | 3 | 6,6 |

Tabelle II

| Beispiel | Komponente 1 | | Komponente 2 | | Sedimentations-neigung | Homogenität | Ausbreitmaß |
|---|---|---|---|---|---|---|---|
| | Art | Menge in Gew.-% | Art | Menge in Gew.-%*) | | | (mm) |
| V 6 | — | — | — | — | mittel | mittel | 154 |
| V 7 | lineares Polyethylen-oxid eines MG von $>4 \cdot 10^6$ | 0,02 | — | — | mittel | mittel | 165 |
| V 8 | lineares Polyethylen-oxid eines MG von $>4 \cdot 10^6$ | 0,05 | — | — | mäßig | gut | 159 |
| V 9 | lineares Polyethylen-oxid eines MG von etwa $10^4$ | 0,05 | — | — | stark | wenig | 160 |
| V 10 | lineares Polyethylen-oxid eines MG von etwa $10^4$ | 0,10 | — | — | stark | wenig | 157 |
| V 11 | MHEC | 0,02 | — | — | mäßig | gut | 167 |
| 16 | MHEC | 0,05 | Blockpolymerisat aus Polypro-pylenoxid eines MG von etwa 1700 mit 10% Ethylenoxid (+ 7% Al-silikat als Träger) | 3 | mäßig | gut | 144 |
| 17 | MHEC | 0,02 | Blockpolymerisat aus Polypro-pylenoxid eines MG von etwa 1700 mit 10% Ethylenoxid (+ 7% Al-silikat als Träger) | 3 | mäßig | mäßig | 164 |
| 18 | MHEC | 0,01 | Blockpolymerisat aus Polypro-pylenoxid eines MG von etwa 1700 mit 10% Ethylenoxid (+ 7% Al-silikat als Träger) | 3 | mittel | mittel | 155 |

Fortsetzung

| Beispiel | Komponente 1 | | Komponente 2 | | Sedimentations-neigung | Homogenität | Ausbreitmaß |
|---|---|---|---|---|---|---|---|
| | Art | Menge in Gew.-% | Art | Menge in Gew.-%*) | | | (mm) |
| 19 | MHEC | 0,02 | Blockpolymerisat aus Polypropylenoxid eines MG von etwa 1700 mit 10% Ethylenoxid (+ 5% Kieselsäure als Träger) | 5 | mäßig | gut | 157 |
| 20 | MHEC | 0,02 | Blockpolymerisat aus Ethylendiamin, Ethylenoxid und Propylenoxid (+ 7% Al-silikat als Träger) | 5 | mäßig | gut | 155 |
| 21 | MHEC | 0,02 | Blockpolymerisat aus Polypropylenoxid eines MG von etwa 2300 mit 10% Ethylenoxid (+ 5% Kieselsäure als Träger) | 3 | mäßig | gut | 150 |
| 22 | MHEC | 0,02 | Blockpolymerisat wie in Bsp. 16 | 3 | mäßig | gut | 153 |

*) Bezogen auf das Gewicht der Komponente 1.

Tabelle II (Fortsetzung)

| Beispiel | LP-Gehalt in Vol.-% | Anzahl der Rüttelstöße bis zum Powers-Wert | | | | | | | Biegefestigkeit in N/mm² nach | | | Druckfestigkeit in N/mm² nach | | |
|---|---|---|---|---|---|---|---|---|---|---|---|---|---|---|
| | | 10 | 9 | 8 | 7 | 6 | 5 | 4 | 2 Tagen | 7 Tagen | 28 Tagen | 2 Tagen | 7 Tagen | 28 Tagen |
| V 6 | 5,4 | 1 | 3 | 6 | 11 | 19 | 25 | 33 | 4,64 | 6,10 | 7,43 | 24,6 | 30,0 | 39,6 |
| V 7 | — | 1 | 3 | 6 | 12 | 18 | 25 | 34 | — | — | — | — | — | — |
| V 8 | 8,0 | — | 2 | 4 | 7 | 12 | 18 | 27 | 3,51 | 5,66 | 7,06 | 19,2 | 23,8 | 33,4 |
| V 9 | 8,2 | — | 2 | 4 | 7 | 12 | 19 | 27 | 3,56 | 4,99 | 6,91 | 18,9 | 24,2 | 34,4 |
| V 10 | — | 1 | 3 | 5 | 8 | 13 | 21 | 31 | — | — | — | — | — | — |
| V 11 | 11,1 | — | — | 2 | 5 | 8 | 13 | 19 | 3,94 | 4,81 | 5,88 | 16,6 | 20,0 | 27,3 |
| 16 | — | 1 | 4 | 8 | 13 | 21 | 31 | 51 | — | — | — | — | — | — |
| 17 | 7,8 | — | 3 | — | 6 | 10 | 16 | 25 | 4,53 | 5,70 | 6,79 | 21,0 | 25,0 | 32,6 |
| 18 | — | — | 3 | 6 | 9 | 14 | 22 | 29 | — | — | — | — | — | — |
| 19 | 7,1 | — | — | 5 | 9 | 15 | 22 | 29 | — | — | — | — | — | — |
| 20 | — | — | — | 5 | 8 | 13 | 19 | 36 | — | — | — | — | — | — |
| 21 | — | 1 | 3 | 5 | 9 | 14 | 22 | 32 | — | — | — | — | — | — |
| 22 | — | 1 | 3 | 5 | 9 | 13 | 20 | 29 | — | — | — | — | — | — |

0 008 094

**0 008 094**

**Patentansprüche**

1. Zusatzmittel für Beton oder Zementmörtel aus einem Celluloseether und einem Tensid, dadurch gekennzeichnet, daß das Mittel als Celluloseether einen wasserlöslichen nichtionogenen Celluloseether und als Tensid ein nichtionogenes, schwachschäumendes Tensid enthält, wobei der Anteil des Tensids 0,5 bis 20 Gew.-%, insbesondere 1 bis 10 Gew.-%, bezogen auf das Gewicht des Celluloseethers beträgt.

2. Zusatzmittel nach Anspruch 1, dadurch gekennzeichnet, daß das Tensid einen größeren Anteil hydrophober als hydrophiler Gruppen aufweist.

3. Zusatzmittel nach Anspruch 1 oder 2, dadurch gekennzeichnet, daß das Tensid ein gegebenenfalls modifiziertes Blockpolymerisat aus Propylenoxid und Ethylenoxid oder ein Alkylarylpolyethylenglykolether mit einem geringen Anteil an Ethylenoxidmolekülen ist.

4. Zusatzmittel nach Anspruch 3, dadurch gekennzeichnet, daß das Tensid einen Propylenoxid-Anteil aufweist.

5. Zusatzmittel nach einem der Ansprüche 1 bis 4, dadurch gekennzeichnet, daß der Celluloseether eine Methyl-hydroxyethylcellulose, Methyl-hydroxypropylcellulose, Ethyl-hydroxyethylcellulose oder Hydroxyethylcellulose ist.

6. Verwendung des Zusatzmittels für Beton oder Zementmörtel nach einem der Ansprüche 1 bis 5 als Pumphilfe für Beton oder Zementmörtel.

7. Verwendung nach Anspruch 6, dadurch gekennzeichnet, daß der Anteil des Zusatzmittels so eingestellt wird, daß auf das Gewicht der trockenen Anteile des Zementmörtels oder Betons 0,005 bis 0,5 Gew.-%, insbesondere 0,01 bis 0,05 Gew.-% Celluloseether kommen.

**Claims**

1. Additive for concrete and cement mortar, which consists of a cellulose ether and a surface-active agent characterized in that it contains as said cellulose ether a water-soluble, non-ionic cellulose ether and as said surface-active agent a non-ionic, low-foaming surface-active agent, and that the non-ionic, low-foaming surface-active agent is used in a proportion of 0.5 to 20% by weight, in particular 1 to 10% by weight, based on the weight of cellulose ether.

2. Additive as claimed in claim 1, characterized in that the surface-active agent has a larger proportion of hydrophobic groups than hydrophilic groups.

3. Additive as claimed in claim 1 or 2, characterized in that the surface-active agent is an optionally modified block polymer of propylene oxide and ethylene oxide or an alkylaryl poly-(ethylene glycol)ether having a small proportion of ethylene oxide molecules.

4. Additive as claimed in claim 3, characterized in that the surface-active agent has a proportion of propylene oxide.

5. Additive as claimed in any one of claims 1 to 4, characterized in that said cellulose ether is methylhydroxyethyl cellulose, methylhydroxypropyl cellulose, ethylhydroxyethyl cellulose or hydroxyethyl cellulose.

6. Use of the additive for concrete and cement mortar, as claimed in any of claims 1 to 5, as a pumping aid for concrete or cement mortar.

7. Use as claimed in claim 6, characterized in that said cellulose ether is used in a proportion of 0.005 to 0.5% by weight, in particular 0.01 to 0.05% by weight, based on the weight of the dry solids in the cement mortar or concrete.

**Revendications**

1. Additif pour béton ou mortier de ciment comprenant un éther de cellulose et un tenside, caractérisé en ce que l'additif contient un éther de cellulose hydrosoluble non ionogène et un tenside non ionogène faiblement moussant, la proportion du tenside étant comprise entre 0,5 et 20% en poids, en particulier entre 1 et 10% en poids, rapportée au poids de l'ether de cellulose.

2. Additif selon la revendication 1, caractérisé en ce que le tenside présente un nombre de groupes hydrophobes supérieur au nombre de groupes hydrophiles.

3. Additif selon la revendication 1 ou 2, caractérisé en ce que le tenside est un polymère séquencé éventuellement modifié, à partir d'oxyde de propylène et d'oxyde d'éthylène ou un polyéthylène glycoléther d'alkylaryle avec une faible proportion de molécules d'oxyde d'éthylène.

4. Additif selon la revendication 3, caractérisé en ce que le tenside présente une fraction d'oxyde de propylène.

5. Additif selon l'une des revendications 1 à 4, caractérisé en ce l'éther de cellulose est une méthylhydroxyéthylcellulose, une méthylhydroxypropylcellulose, une éthylhydroxyéthylcellulose ou une hydroxyéthylcellulose.

12

**0 008 094**

6. Utilisation de l'additif pour béton ou mortier de ciment selon l'une des revendications 1 à 5 comme adjuvant de pompage pour béton ou mortier de ciment.

7. Utilisation selon la revendication 6, caractérisé en ce que la proportion d'additif est régléede sorte qu'on ajoute 0,005 à 5% en poids, en particulier de 0,01 à 0,05% en poids d'éther de cellulose par rapport au poids de la fraction sèche du mortier de ciment ou de béton.